# EUROPEAN PATENT SPECIFICATION

(11) **EP 3 614 770 B1**
(45) Date of publication and mention of the grant of the patent: **28.02.2024**
(21) Application number: 18190522.5
(22) Date of filing: 23.08.2018
(51) Int. Cl.: H04W 72/543, H04W 72/121, H04W 88/06

(54) **VEHICLE, APPARATUSES, METHODS, AND COMPUTER PROGRAMS FOR A MOBILE TRANSCEIVER AND A MANAGING MOBILE TRANSCEIVER ASSIGNING RADIO RESOURCES**
FAHRZEUG, VORRICHTUNGEN, VERFAHREN UND COMPUTERPROGRAMME FÜR EINEN MOBILEN SENDER-EMPFÄNGER UND EINEN VERWALTENDEN MOBILEN SENDER-EMPFÄNGER ZUR ZUWEISUNG VON FUNKRESSOURCEN
VÉHICULE, APPAREILS, PROCÉDÉS ET PROGRAMMES INFORMATIQUES POUR UN ÉMETTEUR-RÉCEPTEUR MOBILE ET ÉMETTEUR-RÉCEPTEUR MOBILE DE GESTION ATTRIBUANT DES RESSOURCES RADIO

(43) Date of publication of application: 26.02.2020
(73) Proprietor: VOLKSWAGEN AKTIENGESELLSCHAFT, 38440 Wolfsburg (DE); Technische Universität Dresden, 01069 Dresden (DE)
(72) Inventor: FRANCHI, Norman, 01277 Dresden (DE); HAIDER MAHDI, Ali, 01097 Dresden (DE); JACOB, Richard, 15370 Fredersdorf (DE); JORNOD, Guillaume, 10245 Berlin (DE); EL ASSAAD, Ahmad, 38488 Wolfsburg (DE)
(74) Representative: 2SPL Patentanwälte PartG mbB

(56) References cited:
- WO-A1-2016/159712
- WO-A1-2017/135783
- WO-A1-2018/052560
- WO-A1-2019/006085
- US-A1- 2017 223 723

## Description

The present invention relates to a methods (claims 1, 9), apparatus (claims 13, 14) and a computer program (claim 13) for assigning radio resources in a scenario in which multiple radio technologies are available.

Wireless service environment is steadily growing. Multiple different Radio Access Technologies (RATs) and mobile communication systems of multiple generations offer services at different quality and coverage levels. For example, Wireless Local Area Network (WLAN) technology has made its way into many households. At the same time cellular networks also cover many households. As a result both RATs are available and in most of the cases a choice has to be made which one of the RATs to use. For example, one strategy is to always use WLAN when available and accessible.

When it comes to cellular services, then multiple RATs can be available, e.g. different access technologies and different operators. Usually, a mobile device is registered with an operator and handovers to different RAT are under the control of the network. A network entity may then instruct the mobile device to take measurements on other frequencies and/or systems, and to report measurement results to the network. Based on these measurement results, the network can then decide on inter-frequency and inter-RAT handovers.

For example, document US20090180451 describes a concept determining different activity patterns for two different RATs and then operate according to the activity patterns. This concept describes a completely reactive system. It takes current QoS information and adapts the RAT pattern in order to fulfil some requirement. It has a managing unit in order to use direct link communications. The concept does not consider vehicular communication and does not make use of vehicular sensors in order to predict unmanaged technology QoS such as IEEE 802.11p. Document US20160373971A1 describes a concept in which master user equipment provides inter-frequency measurement information or inter-RAT measurement information for a group of multiple user equipment. It facilitates the handover between cells in the scope of network based technologies. Direct link communication is not used. Here, the switching decision is made accounting for some measurements, this, again, is a reactive system. It does not account for the potential QoS information coming from the used networks (here 3^{rd} generation and 4^{th} Generation systems). The master in this concept makes handover decisions for the followers (slaves).

Document WO 2016/159712 A1 discloses a method of a first user equipment (UE) in a wireless vehicular communication network. The method includes receiving a plurality of messages including control and data messages from at least one second UE using at least one of multiple resource pools, wherein the plurality of messages comprise event-triggered or periodic traffic and the multiple resource pools comprise at least one of dedicated or shared resource pools. The method further includes determining the at least one of the multiple resource pools to transmit the plurality of messages to the at least one second UE, wherein multiple traffic types or priorities are multiplexed in the at least one of the multiple resource pools. The method further includes dynamically adjusting resource selection of the first UE within the at least one of the multiple resource pools based on a state of the wireless vehicular communication network and directly communicating the plurality of messages to the at least one second UE using the at least one of the multiple resource pools.

There is a demand for an improved concept for multi-RAT radio resource assignment. The independent claims provide an improved concept for multi-RAT radio resource assignment.

Embodiments are based on the finding that most of the systems are reactive, consider current QoS information, and adapt the RAT pattern in order to fulfil some requirement. It is another finding that a mobile device may be used to assign radio resources from different RATs. Such a mobile device may manage direct link communications within a coordinated group of mobile devices or vehicles in order to maintain a certain overall quality of application/service. Embodiments may account for potential Quality of Service (QoS) information coming from the used networks/different RATs (e.g. from different generation cellular systems, such as 3^{rd} generation (3G), 4^{th} generation (4G), 5^{th} generation (5G), IEEE 802.11p (Institute of Electrical and Electronics Engineers)). Embodiments are based on the finding that in a group of mobile devices a managing mobile device may collect information on desired qualities of services from the group members and information on available qualities of services in the available RATs. Based on this information an assignment of radio resources can be carried out.

Embodiments provide a method for a managing mobile transceiver assigning radio resources to one or more other mobile transceivers in a group of mobile transceivers in a communication environment having two or more radio access technologies available. The method comprises obtaining information on desired services and desired qualities of service from the mobile transceivers in the group of mobile transceivers. The method further comprises obtaining information on a quality of service available in the two or more radio access technologies. The method further comprises allocating radio resources of at least one of the two or more radio access technologies to the mobile transceivers of the group of mobile transceivers based on the information on the desired services and desired qualities of service and based on the information on the quality of service available. Embodiments enable management of radio resources used by a group of mobile transceivers by a managing mobile transceiver of the group. This may be particularly beneficial in a vehicular environment in which vehicles travel through the communication environment experiencing varying coverage or QoS situations for different RATs.

In further embodiments the method may comprise communicating information on quality of service available with one or more entities of the radio access technologies. These other entities may correspond to mobile transceivers or base stations or other nodes of the RATs, for example, being able to predict or estimate QoS levels based on current load or interference situations in the respective RATs. For example, embodiments may comprise predicting the information on the quality of service available in the two or more radio access technologies based on information communicated with one or more entities of the radio access technologies and/or one or more mobile transceivers of the group of mobile transceivers. Embodiments may enable different options to obtain information to base such prediction on. For example, a distributed approach may be used in embodiments, where the mobile transceivers of the group all are managing mobile transceivers, share information on RAT service qualities and derive a resource assignment in a distributed manner.

In some embodiments the information communicated with the one or more entities of the radio access technologies and/or one or more mobile transceivers of the group of mobile transceivers may comprise one or more elements of the group of information on a load of the radio access technologies or the one or more mobile transceivers, information on a position of the one or more mobile transceivers, information on a load periodicity in the two or more radio access technologies and/or at the one or more mobile transceivers, information on historical measurements or QoS-levels of the radio access technologies or the one or more mobile transceivers, information on sensor data from the one more mobile transceivers, and information on spatial and/or time/historic quality of service measurements from other transceivers.

In further embodiments the method may comprise determining the managing mobile transceiver in the group of mobile transceivers. Embodiments may determine or re-assign the role of the managing mobile transceiver in the group of mobile transceivers. This may be advantageous particularly if the group of mobile transceivers is a group of vehicles or if the group of mobile transceivers is a platoon of vehicles. For example, the group of mobile transceivers may be a platoon of vehicles, and the platoon of vehicles comprises a vehicle leading the platoon, which may also comprise the managing mobile transceiver. In another embodiment, the group of mobile transceivers is a platoon of vehicles and the platoon of vehicles comprises a vehicle leading the platoon and a different vehicle comprises the managing mobile transceiver. So the role of leading the platoon and being the managing mobile transceiver can be collocated or located at different vehicles in embodiments.

Embodiments also provide a method for a mobile transceiver of a group of mobile transceivers in a communication environment having two or more radio access technologies available. The method comprises participating in the group of mobile transceivers, and obtaining information on a managing mobile transceiver of the group. The method further comprises providing information on one or more desired services and one or more desired qualities of service to the managing mobile transceiver. The method further comprises receiving information on resources of at least one of the radio access technologies to use for communicating with mobile transceivers of the group. Embodiments may enable mobile transceivers of the group to receive radio resource information on resources for direct communication from a managing mobile transceiver of the group.

In some embodiments the group of mobile transceivers corresponds to a platoon of vehicles. The participating in the group may correspond to joining the platoon.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Embodiments also provide an apparatus for a managing mobile transceiver assigning radio resources to one or more other mobile transceivers in a group of mobile transceivers in a communication environment having two or more radio access technologies available. The apparatus comprises one or more interfaces configured to communicate using at least one out of two or more radio access technologies, and a control module configured to control the one or more interfaces, wherein the control module is configured to perform a method as described herein. Yet another embodiment is an apparatus for a mobile transceiver of a group of mobile transceivers in a communication environment having two or more radio access technologies available. The apparatus comprises one or more interfaces configured to communicate using at least one of the two or more radio access technologies. The apparatus further comprises a control module configured to control the one or more interfaces, wherein the control module is configured to perform a method as described herein. Another embodiment is a vehicle comprising an apparatus as described herein. A platoon of such vehicles would be another embodiment.

Other embodiments are a system comprising the above described apparatuses and a method for a system comprising the above described methods.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for a managing mobile transceiver;
Fig. 2 illustrates a block diagram of an embodiment of a method for a mobile transceiver;
Fig. 3 illustrates an embodiment of an apparatus for a managing mobile transceiver and an embodiment of an apparatus for a mobile transceiver;
Fig. 4 illustrates a platoon scenario in an embodiment; and
Fig. 5 illustrates a block diagram of another embodiment of a method for a managing mobile transceiver.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

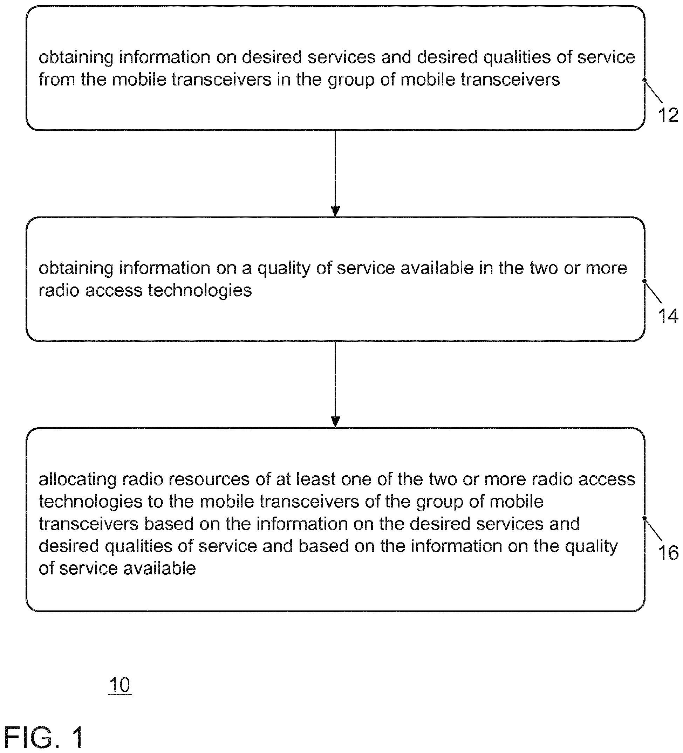

Fig. 1 shows an embodiment of a method 10 for a managing mobile transceiver assigning radio resources to one or more other mobile transceivers in a group of mobile transceivers 200 in a communication environment having two or more radio access technologies available. The method 10 comprises obtaining 12 information on desired services and desired qualities of service from the mobile transceivers in the group of mobile transceivers. The method 10 further comprises obtaining information on a quality of service available in the two or more radio access technologies, and allocating 16 radio resources of at least one of the two or more radio access technologies to the mobile transceivers of the group of mobile transceivers based on the information on the desired services and desired qualities of service and based on the information on the quality of service available.

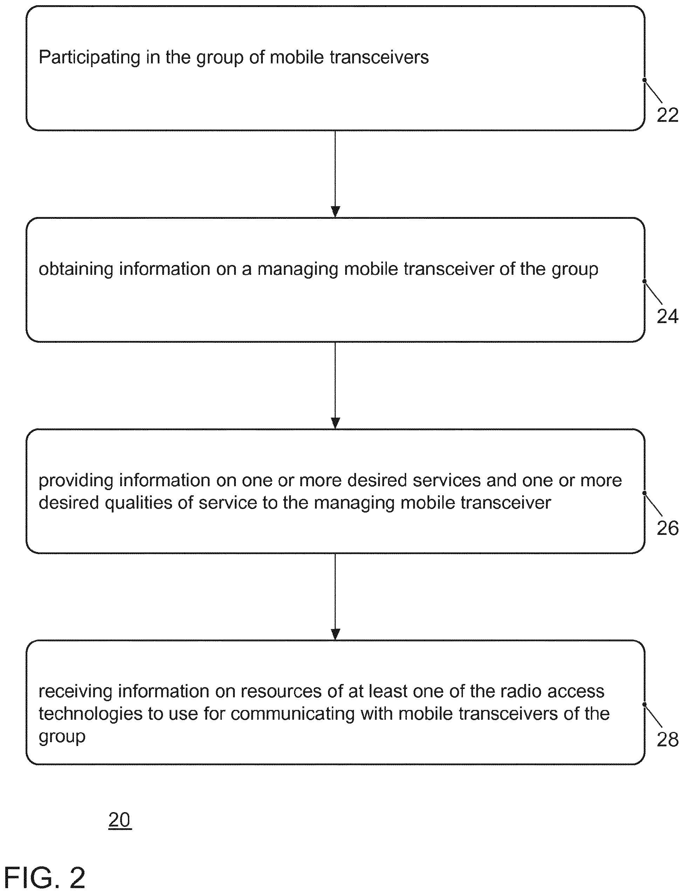

Fig. 2 illustrates an embodiment of a method 20 for a mobile transceiver of a group of mobile transceivers in a communication environment having two or more radio access technologies available. The method 20 comprises participating 22 in the group of mobile transceivers, and obtaining 24 information on a managing mobile transceiver of the group. The method 20 further comprises providing 26 information on one or more desired services and one or more desired qualities of service to the managing mobile transceiver, and receiving 28 information on resources of at least one of the radio access technologies to use for communicating with mobile transceivers of the group.

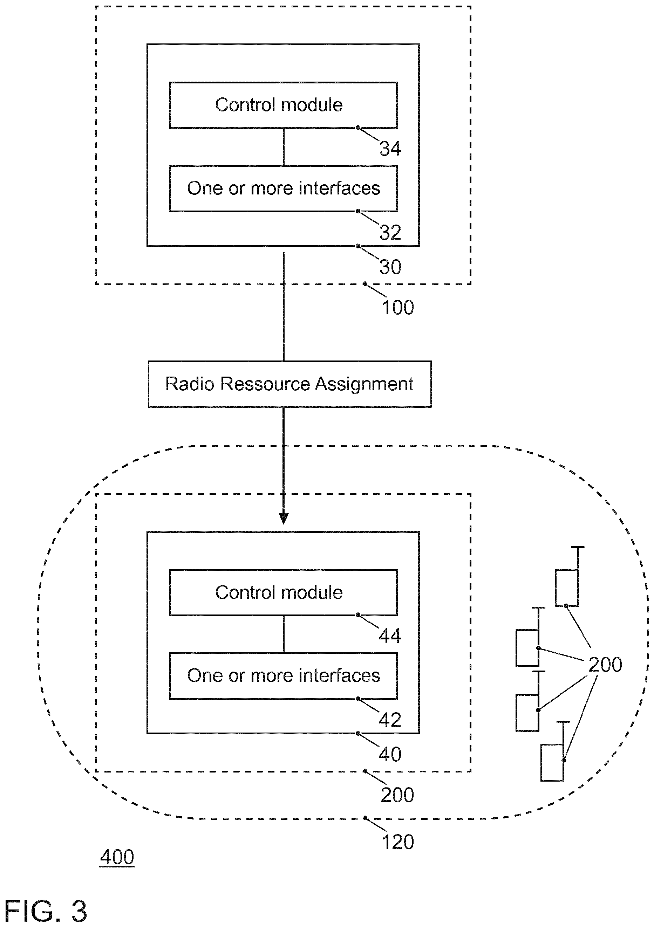

Fig. 3 illustrates an embodiment of an apparatus 30 for a managing mobile transceiver 100 and an embodiment of an apparatus 40 for a mobile transceiver 200. The apparatus 30 for the managing mobile transceiver 100 is configured to assign radio resources to one or more other mobile transceivers 200 in a group 120 of mobile transceivers 200 in a communication environment 400 having two or more radio access technologies available. The apparatus 30 comprises one or more interfaces 32, which are configured to communicate using at least one out of the two or more radio access technologies. The apparatus 30 further comprises a control module 34, which is coupled to the one or more interfaces 32. The control module 34 is configured to control the one or more interfaces 32 and to perform a method 10 according to the above description. Fig. 3 further shows an embodiment of a managing mobile transceiver 100 comprising an embodiment of the apparatus 10. In the embodiment illustrated in Fig. 3 the managing mobile transceiver 100 is shown outside the group 120 of mobile transceivers 200. In other embodiments, the managing mobile transceiver 100 may be part of the group 120 as will be detailed subsequently.

Fig. 3 further shows an embodiment of the apparatus 40 for a mobile transceiver 200 of a group 120 of mobile transceivers 200 in a communication environment having two or more radio access technologies available. Fig. 3 further illustrates an embodiment of a mobile transceiver 200 comprising an embodiment of the apparatus 40. The apparatus 40 comprises one or more interfaces 42 configured to communicate using at least one of the two or more radio access technologies. The apparatus 40 further comprises a control module 44, which is coupled to the one or more interfaces 42. The control module 44 is configured to control the one or more interfaces 42 and to perform a method 20 according to above description. A vehicle comprising an apparatus 30, 40 is another embodiment.

Another embodiment in a communication environment 400, which comprises two or more radio access technologies or mobile communication systems. Here and in the following the terms Radio Access Technology (RAT) and mobile communication system/network are used synonymously.

In embodiments the one or more interfaces 32, 42 may correspond to any means for obtaining, receiving, transmitting or providing analog or digital signals or information, e.g. any connector, contact, pin, register, input port, output port, conductor, lane, etc. which allows providing or obtaining a signal or information. Such information may be communicated in terms of analog or digital signals, e.g. by means of messages represented by digital or binary sequences. An interface may be wireless or wireline and it may be configured to communicate, i.e. transmit or receive signals, information with further internal or external components. The one or more interfaces 32, 42 may comprise further components to enable according communication in the mobile communication system or environment 400, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 32, 42 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 32, 42 may serve the purpose of transmitting or receiving or both, transmitting and receiving, information, such as information related to capabilities, application requirements, trigger indications, requests, message interface configurations, feedback, information related to control commands etc.

As shown in Fig. 3 the respective one or more interfaces 32, 42 are coupled to the respective control modules 34, 44 at the apparatuses 30, 40. In embodiments the control modules 34, 44 may be implemented using one or more processing units, one or more processing devices, any means for processing, such as a processor, a computer or a programmable hardware component being operable with accordingly adapted software. In other words, the described functions of the control modules 34, 44 may as well be implemented in software, which is then executed on one or more programmable hardware components. Such hardware components may comprise a general purpose processor, a Digital Signal Processor (DSP), a microcontroller, etc.

Fig. 3 also shows an embodiment of a system or environment 400 comprising embodiments the mobile transceivers 100, 200, which may correspond to vehicles, as will be laid out in more details below. In embodiments, communication, i.e. transmission, reception or both, may take place among mobile transceivers/vehicles 100, 200 directly and/or between mobile transceivers/vehicles 100, 200 and a network component (infrastructure or mobile transceiver) or application server (e.g. a base station, a network server, a backend server, etc.). Such communication may make use of a mobile communication system/environment 400. Such communication may be carried out directly, e.g. by means of Device-to-Device (D2D) communication, which may also comprise Vehicle-to-Vehicle (V2V) or car-to-car communication in case of vehicles. Such communication may be carried out using the specifications of a mobile communication system/environment 400.

The mobile communication system/environment 400 may, for example, comprise one of the Third Generation Partnership Project (3GPP)-standardized mobile communication networks, where the term mobile communication system is used synonymously to mobile communication network. The mobile or wireless communication system/environment 400 may correspond to a mobile communication system or a RAT of the 5th Generation (5G) and may use mm-Wave technology. The mobile communication system or RAT may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable or configured to communicate with one or more active mobile transceivers/vehicles 100, 200 and a base station transceiver can be located in or adjacent to a coverage area of another base station transceiver, e.g. a macro cell base station transceiver or small cell base station transceiver. Hence, embodiments may provide a mobile communication system/environment 400 comprising two or more mobile transceivers/vehicles 100, 200 and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, a vehicle etc. A mobile transceiver may also be referred to as User Equipment (UE) or mobile in line with the 3GPP terminology. A vehicle may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point etc., which may be further subdivided in a remote unit and a central unit.

A mobile transceiver 100, 200 can be associated with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

Mobile transceivers 100, 200 may communicate directly with each other, i.e. without involving any base station transceiver, which is also referred to as Device-to-Device (D2D) communication. An example of D2D is direct communication between vehicles, also referred to as Vehicle-to-Vehicle communication (V2V), car-to-car using 802.11p, respectively. In embodiments the one or more interfaces 32, 42 can be configured to use this kind of communication. In order to do so radio resources are used, e.g. frequency, time, code, and/or spatial resources, which may as well be used for wireless communication with a base station transceiver. The assignment of the radio resources may be controlled by a base station transceiver, i.e. the determination which resources are used for D2D and which are not. In embodiments the managing mobile transceiver may at least partly take this task and manage or assign radio resources potentially from different RATs in the group 120 of mobile transceivers 200. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc.

For example, direct Cellular Vehicle-to-Anything (C-V2X) transmission, where V2X includes at least V2V, V2- Infrastructure (V2I), etc., according to 3GPP Release 14 can be managed by infrastructure (so-called mode 3) or run in a User Equipment (UE) Autonomous mode (UEA), (so-called mode 4). In embodiments the two or more mobile transceivers 100, 200 as indicated by Fig. 3 may be registered in the same mobile communication system. In other embodiments one or more of the mobile transceivers 100, 200 may be registered in different mobile communication systems, which form the communication environment 400 offering at least two different RATs. The different mobile communication systems 400 may use the same access technology but different operators or they may use different access technologies as outlined above.

In embodiments the managing mobile transceiver 100 may manage the radio resources for the group 120, e.g. with respect to direct communication and using V2X as an example for one RAT offering direct communication between vehicles and another one may be 802.11p. In embodiments the resources assigned to the mobile transceivers 200 of the group might not all be the very same nor are they necessarily from the same RAT. Multiple scenarios are conceivable in embodiments.

A Multi-Radio Access Technology (Multi-RAT) communication system may aim at taking the most out of existing communications technologies by multi-RAT relaying, combination of RATs or switching between RATs. Whether it is between these instances or within them, a decision-making is required, which takes place at the managing mobile transceiver 100 in embodiments. In embodiments, coordination between automated vehicles may be based on the Multi-RAT environment. Some applications may comprise time-critical safety-relevant functions, such as High Density Platooning, in which commercial trucks are driving with inter-vehicle distances below ten meters, putting high requirements of the communication system quality of service (QoS), for instance on the latency.

In embodiments, the decision in terms of combination, switching or relaying is moved from the network (communications provider level by some entity such as a diversity middleware, or a diversity layer) to the managing mobile transceiver 100. The managing mobile transceiver 100 is responsible for the decision-making, attempts to manage the multi-RAT communication in order to fulfil connectivity QoS requirements in some embodiments. Within a highly coordinated group of vehicles or mobile transceivers, this fulfilment of connectivity QoS requirements might not be heterogeneous as the infringement of requirements on one link may impair the performance of the whole group 120. In some embodiment a distributed resource assignment method may be used and the mobile transceivers 200 of the group may all be managing mobile transceivers 100, exchanging information on QoS or predicted QoS and determine the resource assignment for the one or more RATs in a distributed fashion.

In embodiments, coordinated systems may be organized around a central entity such as a leader or managing mobile transceiver 100. This leader 100 may have the responsibility to coordinate the whole group 120. Then, the majority of the communications within the group 120 may be between the leader 100 and the group members 200.

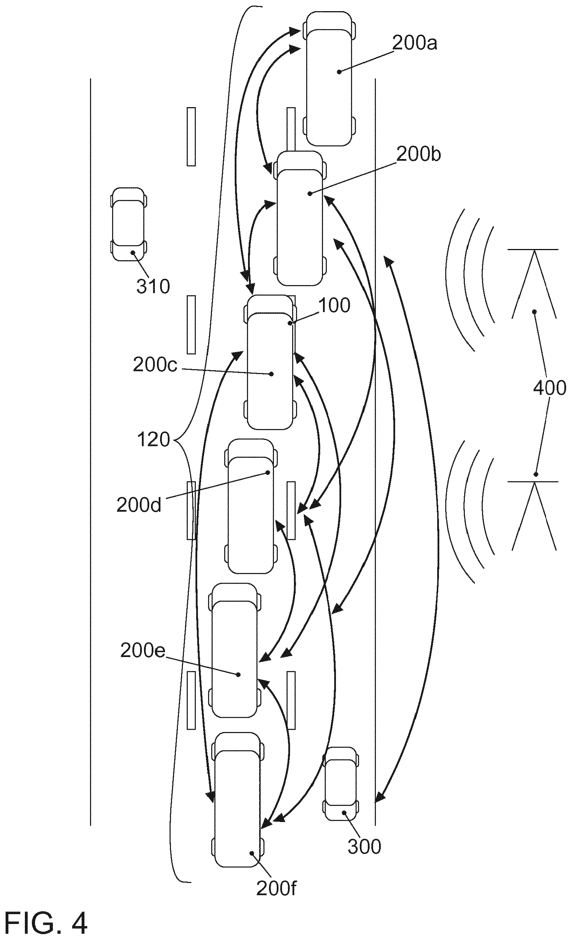

Fig. 4 illustrates a platoon scenario in an embodiment. Fig. 4 shows a group 120 of mobile transceivers 200a-f, which correspond to vehicles (e.g. trucks) 200a-f in a platoon 120. Fig. 4 illustrates a three lane road section and the platoon is passing a slower vehicle 300 in the right lane. The platoon 120 uses the middle lane for passing while being passed itself by a faster vehicle 310 on the left lane. The radio environment 400 is determined by at least two RATs. For example, they may be IEEE 802.11p and 3GPP V2X. The two RATs are represented by the two base stations making up the radio environment 400. It is to be noted that Fig. 4 shows the platoon in the coverage of the two RATs, which may not necessarily be the case in embodiments. Particularly direct communication may not need base station coverage as already mentioned above. In the platoon there is a managing mobile transceiver 100/200c, which assigns radio resources for direct communication in the platoon. The arrows in Fig. 3 indicate possible communications, in essence any group member 200x (x in a-f) may communicate with any other group member.

In some embodiments the managing mobile transceiver 100 represents a coordinating entity also managing the multi-RAT decision-making of the platoon 120. This decision-making may be mainly based on the prediction of QoS among the available RATs. For this purpose the method 10, that is carried out at the managing mobile transceiver 100, may comprise communicating information on quality of service available with one or more entities, e.g. base stations, servers, network nodes, of the radio access technologies. The method 10 may further comprise predicting the information on the quality of service available in the two or more radio access technologies based on information communicated with one or more entities of the radio access technologies and/or one or more mobile transceivers 200 a-f of the group 120 of mobile transceivers 200. In some embodiments the group members may have information on the QoS available in the different RATs and the managing mobile transceiver 100 may collect this information. For example, the method 10 may comprise negotiating of the resources with the operators or operators' entities in the case of RATs using managed frequency bands. In case of having RATs using managed frequency bands, the RATs may be able to offer different QoSs on different frequency bands. Embodiments may enable a negotiation on desired QoS and available QoS/frequency bands. Embodiments may benefit from multiple sources of information such as predictive QoS (PQoS) data from managing nodes in cellular communication networks. In some embodiments, the managing mobile transceiver 100 would take diversity decisions for the whole group 120, deciding which RAT or combination of RATs is used at a specific time horizon as opposed to a central entity in a RAT.

In embodiments the information communicated with the one or more entities of the radio access technologies and/or one or more mobile transceivers 200 of the group 120 of mobile transceivers 200 may comprise one or more elements of the group of information on a load of the radio access technologies or the one or more mobile transceivers 200, information on a position of the one or more mobile transceivers 200, information on a load periodicity in the two or more radio access technologies and/or at the one or more mobile transceivers 200, information on historical measurements or data of the radio access technologies or the one or more mobile transceivers 200, information on sensor data from the one more mobile transceivers 200, and information on actual, recent and/or historic spatial and/or time quality of service measurements from other transceivers. In embodiments the managing mobile transceiver 100 may take any information into account on which a QoS prediction for a certain RAT can be based. Historical data may also be used, e.g. what was the QoS under similar circumstances (load, location, daytime, day of week, etc.) in the past.

Some embodiments may enable a master-slave communication architecture (with the managing mobile transceiver 100 assuming the role of a master and the mobile transceivers 200a-f of the group assuming the role of slaves). The managing mobile transceiver 100 (as coordinating entity) of the coordinated members 200a-f of the group 120 could communicate the multi-RAT decisions or resource assignments with a diversity entity, layer or middleware of a RAT through a specific signaling. The coordinating entity (managing mobile transceiver 100) may also receive some feedback regarding the achieved QoS of a past communication, again through a dedicated signaling, enabling more accurate decision-making performance in the future. In some embodiments, decision-making may be distributed in the group 120. In some embodiments, when there is no coordinating entity, such as in a completely distributed, decentralized controlled system, the agents (mobile transceivers 200a-f) would decide for one or more (depending of the size of the group) diversity managing entity or managing mobile transceiver 100. One of the methods 10 or 20 may hence comprise determining the managing mobile transceiver 100 in the group 120 of mobile transceivers 200.

As shown in Fig. 4 the group 120 of mobile transceivers 200a-f may be a group of vehicles and/or the group 120 of mobile transceivers 200 may be a platoon of vehicles. In this embodiment the participation in the group 120 corresponds to joining the platoon 120.

Moreover, the platoon 120 of vehicles may comprise a vehicle leading the platoon, which comprises the managing mobile transceiver 100. Despite of what is illustrated in Fig. 4 the managing mobile transceiver 100 may be collocated with leader of the platoon. The first vehicle 200a of the platoon 120 may comprise or assume the role of the managing mobile transceiver 100 in another embodiment. In Fig. 4 the platoon of vehicles comprises a vehicle 200a heading in front the platoon and a different vehicle 200c comprising the managing mobile transceiver 100. Nevertheless, a platoon leader is to be understood as a platoon member 200a-f, which coordinates the driving maneuvers of the platoon. The platoon leader may be the first vehicle 200a in the platoon 120 or it may be at a different position in the platoon 120. So, in the embodiment shown in Fig. 4 the mobile transceiver 200c may be the platoon leader or coordinator for platoon maneuvers and related communication as well as the managing mobile transceiver 100.

As illustrated by Fig. 4 the platoon 120 has multiple platoon members 200a-f being equipped with multiple RATs, e.g. IEEE 802.11p and 5G D2D. For example, the platoon 120 is currently using IEEE 802.11p for its internal signaling. The first vehicles 200a,b of the platoon detect a situation, such as an environmental change (tunnel, high traffic etc.) and signal this event to the platoon leader 200c and managing mobile transceiver 100 in this embodiment. The platoon leader 200c, 100 then communicates with the local base station and negotiates some 5G resources for the whole platoon 120. The platoon leader 200c, 100 then allocates the obtained resources to the platoon members 200a-f for intra platooning communications.

If the platoon 120 is not in a vicinity of a cell or base station, i.e. out of coverage, the platoon leader 200c, 100 may evaluate the different technologies available in terms of PQoS and decide for the quality that fulfils the requirements while minimizing the cost, for instance. In circumstances such as tunnels, the pilot pattern of IEEE 802.11p may make it having a higher packet loss than a technology such as LTE-V mode 4, which is convenient in tunnels as no network coverage is available. The platoon leader 200c, 100 may then calculate the best time to switch the RAT usage within the platoon 120, balancing, for instance, the number of trucks already in the tunnel and the number of trucks outside the tunnel, adapting their IVD (Inter-Vehicle Distance) to cope with the degradation of performance until the RAT is switched. It will then repeat the operation when the platoon 120 exits the tunnel, as another technology may be more adapted or cellular based communications may be available again.

A completely distributed example would include the sharing of the experienced PQoS, environmental information and information from the network. The vehicles 200a-f would then evaluate the best choice in terms of RAT switching or combination. In such an embodiment the group members 200a-f may all comprise managing mobile transceivers 100, which exchange the according information among each other and/or with corresponding network entities. In embodiments the exchanged information may also include capabilities of the involved mobile transceiver. For example, not all mobile transceivers 200a-f of the group may be capable of communicating in all available RATs. This may be taken into account, be it in a centralized or a distributed manner.

The outcome of a local optimization process may be processed by a distributed decision making algorithm in some embodiments in order to achieve a common decision for the RAT scheme for the whole platoon 120. This decision may be time based, i.e. decided for a time horizon and for a duration, that is constantly, at a certain rate, repeated in order to keep the found optimum updated with the new information obtained. At some critical size of a platoon 120, the signaling overhead for the negotiation will be higher than the overhead of deciding for a platoon diversity managing entity/managing mobile transceiver 100, at which point the coordinated group 120 of vehicles will decide for the central entity 100 in order to have an efficient usage of radio resources.

In a coordinated group 120 of vehicles, the choice of a central entity, a cluster center for instance, may provide a gateway to the network, reducing the amount of signaling between the group 120 of vehicles 200a-f and the base station. The managing mobile transceiver 100 may then assume the role of a relay for the group 120. Indeed, the PQoS information would be communicated to one single vehicle 100 only, the required resources negotiated with this vehicle only, which would then distribute the resources among the platooning vehicles 200a-f it manages. These resources may be used in combination with other direct link technologies such as 802.11p.

The PQoS sources of information and the information communicated in embodiments may comprise information coming directly from the network, based on its knowledge of the load, position of other UEs, prediction based on periodicity, historical measurement, information coming from sensors, such as presence of a tunnel, incoming traffic, high number of scatterers, reflectors, and diffractors, and information coming from other vehicles having spatial and time QoS measurements, which are shared through dedicated signaling for instance.

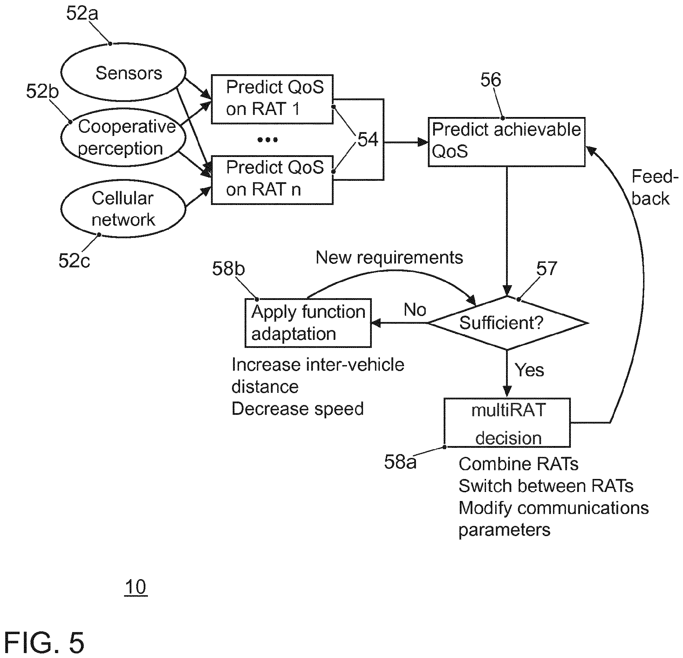

Fig. 5 illustrates a block diagram of another embodiment of a method 10 for a managing mobile transceiver. In the embodiment shown in Fig. 5 multiple inputs or input data may be used. For example, the managing mobile transceiver may use sensor data 52a obtained by its own sensors or by the mobile transceivers of the group, information on cooperative perception possibilities 52b in the group, and information from the cellular networks of the RATs 52c. Based on this information the managing mobile transceiver may predict 54 or estimate QoS on the different RATs and subsequently predict 56 or estimate an overall achievable QoS. Based on the overall achievable QoS the managing mobile transceiver may decide whether the QoS achievable is sufficient and in case it is, an according multiRAT decision 58a is applied (e.g. a diversity scheme may be applied), which may deliver feedback to the overall QoS prediction 56. For example, an according RAT can be selected, multiple RATs may be combined, a switching between RATs may be carried out, or communication parameters may be modified accordingly. In case the predicted achievable QoS is not sufficient, a function adaptation 58b may be applied, which may set new requirements for deciding whether the predicted QoS is sufficient 57. For example, an inter-vehicle distance may be increased or a speed of vehicles may be decreased.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. However, the protection scope of this patent application shall be subject to the protection scope of the claims.

It is further to be noted that methods disclosed in the specification or in the claims may be implemented by a device having means for performing each of the respective steps of these methods.

### List of reference signs

- 10: method for a managing mobile transceiver
- 12: obtaining information on desired services and desired qualities of service from the mobile transceivers in the group of mobile transceivers
- 14: obtaining information on a quality of service available in the two or more radio access technologies control module
- 16: allocating radio resources of at least one of the two or more radio access technologies to the mobile transceivers of the group of mobile transceivers based on the information on the desired services and desired qualities of service and based on the information on the quality of service available
- 20: method for a mobile transceiver of a group of mobile transceivers
- 22: participating in the group of mobile transceivers
- 24: obtaining information on a managing mobile transceiver of the group
- 26: providing information on one or more desired services and one or more desired qualities of service to the managing mobile transceiver
- 28: receiving information on resources of at least one of the radio access technologies to use for communicating with mobile transceivers of the group
- 30: apparatus for a managing mobile transceiver
- 32: one or more interfaces
- 34: control module
- 40: apparatus for a mobile transceiver
- 42: one or more interfaces
- 44: control module
- 52a: sensor data
- 52b: Cooperative perception
- 52c: Cellular network data
- 54: QoS prediction for RATs 1..n
- 56: Overall QoS prediction
- 57: QoS sufficiency check
- 58a: Apply diversity scheme
- 58b: Apply function adaptation
- 100: managing mobile transceiver
- 120: group of mobile transceivers
- 200: mobile transceiver
- 200a-f: mobile transceiver
- 300: vehicle
- 310: vehicle
- 400: communication environment

## Claims

1. A method (10) for a managing mobile transceiver (100) assigning radio resources to one or more other mobile transceivers (200) in a group (120) of mobile transceivers (200) in a communication environment (400) having two or more radio access technologies available, the method (10) comprising
obtaining (12) information on desired services and desired qualities of service from the mobile transceivers (200) in the group (120) of mobile transceivers (200);
obtaining (14) information on a quality of service available in the two or more radio access technologies; and
allocating (16) radio resources of at least one of the two or more radio access technologies to the mobile transceivers (200) of the group (120) of mobile transceivers (200) based on the information on the desired services and desired qualities of service and based on the information on the quality of service available.

2. The method (10) of claim 1, further comprising communicating information on quality of service available with one or more entities of the radio access technologies, the entities corresponding to mobile transceivers or base stations or other nodes of the radio access technologies.

3. The method (10) of one of the claims 1 or 2, further comprising predicting the information on the quality of service available in the two or more radio access technologies based on information communicated with one or more entities of the radio access technologies and/or one or more mobile transceivers (200) of the group (120) of mobile transceivers (200), the entities corresponding to mobile transceivers or base stations or other nodes of the radio access technologies.

4. The method (10) of claim 3, wherein the information communicated with the one or more entities of the radio access technologies and/or one or more mobile transceivers (200) of the group (120) of mobile transceivers (200) comprises one or more elements of the group of information on a load of the radio access technologies or the one or more mobile transceivers (200), information on a position of the one or more mobile transceivers (200), information on a load periodicity in the two or more radio access technologies and/or at the one or more mobile transceivers (200), information on historical measurements of the radio access technologies or the one or more mobile transceivers (200), information on sensor data from the one more mobile transceivers (200), and information on spatial and/or time quality of service measurements from other transceivers.

5. The method (10) of one of the claims 1 to 4, further comprising determining the managing mobile transceiver (100) in the group (120) of mobile transceivers (200).

6. The method (10) of one of the claims 1 to 5, wherein the group (120) of mobile transceivers (200) is a group of vehicles or wherein the group (120) of mobile transceivers (200) is a platoon of vehicles.

7. The method (10) of claim 6, wherein the group (120) of mobile transceivers (200) is a platoon of vehicles, and wherein the platoon of vehicles comprises a vehicle leading the platoon, which comprises the managing mobile transceiver (100).

8. The method (10) of claim 6, wherein the group (120) of mobile transceivers (200) is a platoon of vehicles and wherein the platoon of vehicles comprises a vehicle leading the platoon and a different vehicle comprising the managing mobile transceiver (100).

9. A method (20) for a mobile transceiver (200) of a group (120) of mobile transceivers (200) in a communication environment having two or more radio access technologies available, the method (20) comprising
participating (22) in the group (120) of mobile transceivers (200);
obtaining (24) information on a managing mobile transceiver (100) of the group (120);
providing (26) information on one or more desired services and one or more desired qualities of service to the managing mobile transceiver (100); and
receiving (28) information on resources of at least one of the radio access technologies to use for communicating with mobile transceivers (200) of the group (120).

10. The method (20) of claim 9, wherein the group (120) of mobile transceivers (200) corresponds to a platoon of vehicles.

11. The method (20) of claim 10, wherein the participating in the group (120) corresponds to joining the platoon.

12. A computer program having a program code for performing at least one of the methods of claims 1 to 11, when the computer program is executed on a computer, a processor, or a programmable hardware component.

13. A managing mobile transceiver (100) assigning radio resources to one or more other mobile transceivers (200) in a group (120) of mobile transceivers (200) in a communication environment (400) having two or more radio access technologies available, comprising an apparatus (30), the apparatus (30) comprising one or more interfaces (32) configured to communicate using at least one out of two or more radio access technologies; and
a control module (34) configured to control the one or more interfaces (32), wherein the control module (34) is configured to perform a method (10) according to one of the claims 1 to 8.

14. A mobile transceiver (200) of a group (120) of mobile transceivers (200) in a communication environment having two or more radio access technologies available, comprising an apparatus (40), the apparatus (40) comprising one or more interfaces (42) configured to communicate using at least one of the two or more radio access technologies; and
a control module (44) configured to control the one or more interfaces (42), wherein the control module (44) is configured to perform a method (20) according to one of the claims 9 to 11.

## Patentansprüche

1. Verfahren (10) für einen verwaltenden mobilen Sendeempfänger (100), der Funkressourcen an einen oder mehrere andere mobile Sendeempfänger (200) in einer Gruppe (120) von mobilen Sendeempfängern (200) in einer Kommunikationsumgebung (400) zuweist, die zwei oder mehr Funkzugriffstechnologien verfügbar aufweist, das Verfahren (10) umfassend
Erhalten (12) von Informationen über gewünschte Dienste und gewünschte Dienstgüten von den mobilen Sendeempfängern (200) in der Gruppe (120) von mobilen Sendeempfängern (200);
Erhalten (14) von Informationen über eine Dienstgüte, die in den zwei oder mehr Funkzugriffstechnologien verfügbar ist; und
Zuweisen (16) von Funkressourcen von mindestens einer der zwei oder mehr Funkzugriffstechnologien an die mobilen Sendeempfänger (200) der Gruppe (120) von mobilen Sendeempfängern (200) basierend auf den Informationen über die gewünschten Dienste und die gewünschten Dienstgüten und basierend auf den Informationen über die verfügbare Dienstgüte.

2. Verfahren (10) nach Anspruch 1, ferner umfassend ein Kommunizieren von Informationen über die verfügbare Dienstgüte mit einer oder mehreren Entitäten der Funkzugriffstechnologien, wobei die Entitäten mobilen Sendeempfängern oder Basisstationen oder anderen Knoten der Funkzugriffstechnologien entsprechen.

3. Verfahren (10) nach einem der Ansprüche 1 oder 2, ferner umfassend ein Vorhersagen der Informationen über die Dienstgüte, die in den zwei oder den mehreren Funkzugriffstechnologien verfügbar ist, basierend auf Informationen, die mit einer oder mehreren Entitäten der Funkzugriffstechnologien und/oder mit einem oder mehreren mobilen Sendeempfängern (200) der Gruppe (120) von mobilen Sendeempfängern (200) kommuniziert werden, wobei die Entitäten mobilen Sendeempfängern oder Basisstationen oder anderen Knoten der Funkzugriffstechnologien entsprechen.

4. Verfahren (10) nach Anspruch 3, wobei die Informationen, die mit der einen oder den mehreren Entitäten der Funkzugriffstechnologien und/oder einem oder mehreren mobilen Sendeempfängern (200) der Gruppe (120) von mobilen Sendeempfängern (200) kommuniziert werden, ein oder mehrere Elemente der Gruppe von Informationen auf einer Last der Funkzugriffstechnologien oder des einen oder der mehreren mobilen Sendeempfänger (200), Informationen über eine Position des einen oder der mehreren verwaltenden mobilen Sendeempfänger (200), Informationen über eine Lastperiodizität in den zwei oder mehr Funkzugriffstechnologien und/oder an dem einen oder den mehreren mobilen Sendeempfängern (200), Informationen über historische Messungen der Funkzugriffstechnologien oder des einen oder der mehreren mobilen Sendeempfänger (200), Informationen über Sensordaten von dem einen mehreren mobilen Sendeempfängern (200) und Informationen über räumliche und/oder zeitliche Dienstgütemessungen von anderen Sendeempfängern umfassen.

5. Verfahren (10) nach einem der Ansprüche 1 bis 4, ferner umfassend ein Bestimmen des verwaltenden mobilen Sendeempfängers (100) in der Gruppe (120) von mobilen Sendeempfängern (200).

6. Verfahren (10) nach einem der Ansprüche 1 bis 5, wobei die Gruppe (120) von mobilen Sendeempfängern (200) eine Gruppe von Fahrzeugen ist oder wobei die Gruppe (120) von mobilen Sendeempfängern (200) eine Kolonne von Fahrzeugen ist.

7. Verfahren (10) nach Anspruch 6, wobei die Gruppe (120) von mobilen Sendeempfängern (200) eine Kolonne von Fahrzeugen ist und wobei die Kolonne von Fahrzeugen ein Fahrzeug umfasst, das die Kolonne führt, die den verwaltenden mobilen Sendeempfänger (100) umfasst.

8. Verfahren (10) nach Anspruch 6, wobei die Gruppe (120) von mobilen Sendeempfängern (200) eine Kolonne von Fahrzeugen ist und wobei die Kolonne von Fahrzeugen ein Fahrzeug, das die Kolonne führt, und ein anderes Fahrzeug umfasst, umfassend den verwaltenden mobilen Sendeempfänger (100).

9. Verfahren (20) für einen mobilen Sendeempfänger (200) einer Gruppe (120) von mobilen Sendeempfängern (200) in einer Kommunikationsumgebung, die zwei oder mehr Funkzugriffstechnologien verfügbar aufweist, das Verfahren (20) umfassend
Teilnehmen (22) in der Gruppe (120) von mobilen Sendeempfängern (200);
Erhalten (24) von Informationen über einen verwaltenden mobilen Sendeempfänger (100) der Gruppe (120);
Bereitstellen (26) von Informationen über einen oder mehrere gewünschte Dienste und eine oder mehrere gewünschte Dienstgüten an den verwaltenden mobilen Sendeempfänger (100); und
Empfangen (28) von Informationen über Ressourcen von mindestens einer der Funkzugriffstechnologien, um zum Kommunizieren mit mobilen Sendeempfängern (200) der Gruppe (120) verwendet zu werden.

10. Verfahren (20) nach Anspruch 9, wobei die Gruppe (120) von mobilen Sendeempfängern (200) einer Kolonne von Fahrzeugen entspricht.

11. Verfahren (20) nach Anspruch 10, wobei das Teilnehmen in der Gruppe (120) einem Beitreten der Kolonne entspricht.

12. Computerprogramm, das einen Programmcode zum Durchführen mindestens eines der Verfahren nach den Ansprüchen 1 bis 11 aufweist, wenn das Computerprogramm auf einem Computer, einem Prozessor oder einer programmierbaren Hardwarekomponente ausgeführt wird.

13. Verwaltender mobiler Sendeempfänger (100), der Funkressourcen an einen oder mehrere andere mobile Sendeempfänger (200) in einer Gruppe (120) von mobilen Sendeempfängern (200) in einer Kommunikationsumgebung (400) zuweist, die zwei oder mehr Funkzugriffstechnologien verfügbar aufweist, umfassend eine Einrichtung (30), die Einrichtung (30) umfassend eine oder mehrere Schnittstellen (32), die konfiguriert sind, um unter Verwendung von mindestens einem aus zwei oder mehr Funkzugriffstechnologien zu kommunizieren; und ein Steuermodul (34), das konfiguriert ist, um die eine oder die mehreren Schnittstellen (32) zu steuern, wobei das Steuermodul (34) ferner konfiguriert ist, um ein Verfahren (10) nach einem der Ansprüche 1 bis 8 durchzuführen.

14. Mobiler Sendeempfänger (200) einer Gruppe (120) von mobilen Sendeempfängern (200) in einer Kommunikationsumgebung, die zwei oder mehr Funkzugriffstechnologien verfügbar aufweist, umfassend eine Einrichtung (40), die Einrichtung (40) umfassend eine oder mehrere Schnittstellen (42), die konfiguriert sind, um unter Verwendung mindestens einer der zwei oder mehr Funkzugriffstechnologien zu kommunizieren; und ein Steuermodul (44), das konfiguriert ist, um die eine oder die mehreren Schnittstellen (42) zu steuern, wobei das Steuermodul (44) konfiguriert ist, um ein Verfahren (20) nach einem der Ansprüche 9 bis 11 durchzuführen.

## Revendications

1. Procédé (10) pour un émetteur-récepteur mobile de gestion (100) attribuant des ressources radio à un ou plusieurs autres émetteurs-récepteurs mobiles (200) dans un groupe (120) d'émetteurs-récepteurs mobiles (200) dans un environnement de communication (400) ayant deux technologies d'accès radio ou plus disponibles, le procédé (10) comprenant
l'obtention (12) d'informations sur des services souhaités et des qualités de service souhaitées à partir des émetteurs-récepteurs mobiles (200) dans le groupe (120) d'émetteurs-récepteurs mobiles (200) ;
l'obtention (14) d'informations sur une qualité de service disponible dans les deux technologies d'accès radio ou plus ; et
l'allocation (16) de ressources radio d'au moins l'une des deux technologies d'accès radio ou plus aux émetteurs-récepteurs mobiles (200) du groupe (120) d'émetteurs-récepteurs mobiles (200) sur la base des informations sur les services souhaités et des qualités de service souhaitées et sur la base des informations sur la qualité de service disponible.

2. Procédé (10) selon la revendication 1, comprenant en outre la communication d'informations sur la qualité de service disponible avec une ou plusieurs entités des technologies d'accès radio, les entités correspondant à des émetteurs-récepteurs mobiles ou à des stations de base ou à d'autres noeuds des technologies d'accès radio.

3. Procédé (10) selon l'une des revendications 1 ou 2, comprenant en outre la prédiction des informations sur la qualité de service disponible dans les deux technologies d'accès radio ou plus sur la base d'informations communiquées avec une ou plusieurs entités des technologies d'accès radio et/ou d'un ou plusieurs émetteurs-récepteurs mobiles (200) du groupe (120) d'émetteurs-récepteurs mobiles (200), les entités correspondant à des émetteurs-récepteurs mobiles ou stations de base ou d'autres noeuds des technologies d'accès radio.

4. Procédé (10) selon la revendication 3, dans lequel les informations communiquées avec la ou les entités des technologies d'accès radio et/ou un ou plusieurs émetteurs-récepteurs mobiles (200) du groupe (120) d'émetteurs-récepteurs mobiles (200) comprennent un ou plusieurs éléments du groupe d'informations sur une charge des technologies d'accès radio ou de l'émetteur-récepteur ou des émetteurs-récepteurs mobiles (200), des informations sur une position de l'émetteur-récepteur ou des émetteurs-récepteurs mobiles (200), des informations sur une périodicité de charge dans les deux technologies d'accès radio ou plus et/ou au niveau de l'émetteur-récepteur ou des émetteurs-récepteurs mobiles (200), des informations sur des mesures historiques des technologies d'accès radio ou de l'émetteur-récepteur ou des émetteurs-récepteurs mobiles (200), des informations sur des données de capteur provenant des autres émetteurs-récepteurs mobiles (200), et des informations sur des mesures de qualité de service spatiale et/ou temporelle provenant d'autres émetteurs-récepteurs.

5. Procédé (10) selon l'une des revendications 1 à 4, comprenant en outre la détermination de l'émetteur-récepteur mobile de gestion (100) dans le groupe (120) d'émetteurs-récepteurs mobiles (200).

6. Procédé (10) selon l'une des revendications 1 à 5, dans lequel le groupe (120) d'émetteurs-récepteurs mobiles (200) est un groupe de véhicules ou dans lequel le groupe (120) d'émetteurs-récepteurs mobiles (200) est un peloton de véhicules.

7. Procédé (10) selon la revendication 6, dans lequel le groupe (120) d'émetteurs-récepteurs mobiles (200) est un peloton de véhicules, et dans lequel le peloton de véhicules comprend un véhicule menant le peloton, qui comprend l'émetteur-récepteur mobile de gestion (100).

8. Procédé (10) selon la revendication 6, dans lequel le groupe (120) d'émetteurs-récepteurs mobiles (200) est un peloton de véhicules et dans lequel le peloton de véhicules comprend un véhicule menant le peloton et un véhicule différent comprenant l'émetteur-récepteur mobile de gestion (100).

9. Procédé (20) pour un émetteur-récepteur mobile (200) d'un groupe (120) d'émetteurs-récepteurs mobiles (200) dans un environnement de communication ayant deux technologies d'accès radio ou plus disponibles, le procédé (20) comprenant
la participation (22) au (120) d'émetteurs-récepteurs mobiles (200) ;
l'obtention (24) d'informations sur un émetteur-récepteur mobile de gestion (100) du groupe (120) ;
la fourniture (26) d'informations sur un ou plusieurs services souhaités et une ou plusieurs qualités de service souhaitées à l'émetteur-récepteur mobile de gestion (100) ; et
la réception (28) d'informations sur des ressources d'au moins l'une des technologies d'accès radio à utiliser pour communiquer avec des émetteurs-récepteurs mobiles (200) du groupe (120).

10. Procédé (20) selon la revendication 9, dans lequel le groupe (120) d'émetteurs-récepteurs mobiles (200) correspond à un peloton de véhicules.

11. Procédé (20) selon la revendication 10, dans lequel la participation au groupe (120) correspond à la jonction du peloton.

12. Programme informatique ayant un code de programme pour mettre en oeuvre au moins l'un des procédés selon les revendication 1 à 11, lorsque le programme informatique est exécuté sur un ordinateur, un processeur, ou un composant matériel programmable.

13. Émetteur-récepteur mobile de gestion (100) attribuant des ressources radio à un ou plusieurs autres émetteurs-récepteurs mobiles (200) dans un groupe (120) d'émetteurs-récepteurs mobiles (200) dans un environnement de communication (400) ayant deux technologies d'accès radio ou plus disponibles, comprenant un appareil (30), l'appareil (30) comprenant une ou plusieurs interfaces (32) configurées pour communiquer à l'aide d'au moins un parmi deux technologies d'accès radio ou plus ; et un module de commande (34) configuré pour commander l'interface ou les interfaces (32), dans lequel le module de commande (34) est en outre configuré pour mettre en oeuvre un procédé (10) selon l'une des revendications 1 à 8.

14. Émetteur-récepteur mobile (200) d'un groupe (120) d'émetteurs-récepteurs mobiles (200) dans un environnement de communication ayant deux technologies d'accès radio ou plus disponibles, comprenant un appareil (40), l'appareil (40) comprenant une ou plusieurs interfaces (42) configurées pour communiquer à l'aide d'au moins l'une des deux technologies d'accès radio ou plus ; et un module de commande (44) configuré pour commander l'interface ou les interfaces (42), dans lequel le module de commande (44) est en outre configuré pour mettre en oeuvre un procédé (20) selon l'une des revendications 9 à 11.
